# EUROPÄISCHE PATENTSCHRIFT

(11) **EP 1 666 308 B1**
(45) Veröffentlichungstag und Bekanntmachung des Hinweises auf die Patenterteilung: **12.03.2008**
(21) Anmeldenummer: 05007356.8
(22) Anmeldetag: 05.04.2005
(51) Int. Cl.: B60R 11/02

(54) **Gerätehaltekonsole mit universell verstellbarer Halteplatte**
Universally adjustable device console.
Console pour appareils à réglage universel

(30) Priorität: 29.11.2004 DE 202004018511 U; 18.01.2005 DE 202005000768 U
(43) Veröffentlichungstag der Anmeldung: 07.06.2006
(73) Patentinhaber: Richter, Harald, 75331 Engelsbrand (DE)
(72) Erfinder: Richter, Harald, 75331 Engelsbrand (DE)
(74) Vertreter: Gallo, Wolfgang

(56) Entgegenhaltungen:
- DE-A1- 10 132 039
- DE-U1- 20 010 071
- DE-U1-5202004 005 82
- US-A- 5 779 205
- US-B1- 6 213 438
- US-B1- 6 220 556
- US-B1- 6 390 424
- US-B1- 6 749 160
- PATENT ABSTRACTS OF JAPAN Bd. 013, Nr. 139 (E-738), 6. April 1989 (1989-04-06) & JP 63 300698 A (FUJITSU LTD), 7. Dezember 1988 (1988-12-07)

## Beschreibung

Die Erfindung betrifft eine Gerätehaltekonsole mit verstellbarer Halteplatte zur variablen bzw. einstellbaren Halterung von Kleingeräten wie Kleincomputern, wie sie üblicherweise unter der Bezeichnung "PDA" (Personal Digital Assistant) bekannt sind, mobile Navigationsgeräte, Funktelefone und dergleichen.

Eine derartige Gerätehaltekonsole findet insbesondere in Kraftfahrzeugen Anwendung, um Geräte der genannten Art an der Windschutzscheibe, am Armaturenbrett, an einer Mittelkonsole oder dergleichen in einer für die Benutzung des Geräts bequemen Orientierung zu halten, die je nach räumlicher Relation von Benutzer und Anbringungsort der Haltekonsole nach Bedarf einstellbar sein soll.

Aus der Gebrauchsmusterschrift DE 203 13 215 U1 ist bereits eine Gerätehaltekonsole bekannt, die eine Säule aufweist, die am einen Ende mit einem Fuß versehen ist und am anderen Ende über ein arretierbares Drehgelenk eine schwenkbare Halteplatte trägt, die mit Schnellbefestigungsorganen zum rastbaren Verbinden mit einem aufzunehmenden Gerät oder Gerätehalter versehen ist. Der Fuß ist als Saugfuß ausgebildet, und die Säule bildet einen Schacht, dessen Inneres den Betätigungsmechanismus für den Saugfuß aufnimmt, von welchem lediglich ein Betätigungshebel seitlich aus dem Schacht herausragt.

Aus dem Dokument US-5,779,205 ist eine Gerätekonsole bekannt, mit einem Fuß, einer Saüle und einer damit über einen arretierbaren Gelenkmechanismus verbundenen Halteplatte zum Anbringen eines Gerätehalters oder Geräts gemäß dem Oberbegriff des Anspruchs 1.

Aufgabe der vorliegenden Erfindung ist es, diese sehr vorteilhafte und zweckmäßige Gerätehaltekonsole im Hinblick auf eine universelle Verstellbarkeit der Halteplatte zu verbessern.

Diese Aufgabe wird gemäß der Erfindung durch die im Anspruch 1 angegebene Anordnung gelöst. Vorteilhafte Ausgestaltungen und Weiterbildungen der Erfindung sind Gegenstand der Unteransprüche.

Erfindungsgemäß ist die Haltekonsole so ausgebildet, dass die Halteplatte nicht nur um zwei zueinander orthogonale Achsen und somit universell schwenkbar ist, sondern, bezogen auf eine jeweils gewählte Schwenkstellung, auch noch in ihrem Abstand vom Fuß veränderbar ist.

In einer Weiterbildung der Erfindung weist die erfindungsgemäße Haltekonsole auch noch ein baukastenartiges System von zwei oder mehr verschiedenen austauschbaren Zwischengliedern unterschiedlicher Länge zur Verbindung der beiden orthogonalen Schwenkachsen sowie formschlüssig wirkende Arretierungselemente zur drehmäßigen Arretierung in der gewählten Schwenkstellung auf, so dass zum einen eine größtmögliche Vielfalt der verfügbaren Einstellungen der Halteplatte und damit eine optimale Anpassbarkeit der Gerätehaltekonsole an die jeweils gegebenen räumlichen Verhältnisse gegeben ist, als auch eine größtmögliche Sicherheit gegen ungewollte Veränderung der gewählten Einstellung des zu haltenden Geräts auch bei heftigen Erschütterungen gewährleistet ist, wie sie beim Fahren eines Fahrzeuge über holprige Straßen nicht selten vorkommen.

Ein Ausführungsbeispiel der Erfindung wird nachstehend unter Bezugnahme auf die anliegenden Zeichnungen mehr im einzelnen beschrieben. In den Zeichnungen zeigt:
- Fig. 1: eine Seitenansicht einer Gerätehaltekonsole nach der Erfindung,
- Fig. 2: eine Seitenansicht der Gerätehaltekonsole ähnlich Fig. 1, jedoch in einer veränderten Einstellung der Halteplatte,
- Fig. 3: eine Frontansicht der Gerätehaltekonsole in der Position nach Fig. 2,
- Fig. 4: eine Rückansicht der Gerätehaltekonsole in der Position nach Fig. 2,
- Fig. 5: eine Draufsicht auf die Gerätehaltekonsole in der Position nach Fig. 2,
- Fig. 6: eine Seitenansicht der Gerätehaltekonsole mit ausgetauschtern, nämlich längerem Zwischenglied zwischen den Schwenkachsen,
- Fig. 7: eine Seitenansicht einer abgewandelten Ausführungsform einer Gerätekonsole, wobei der Schwenkarm teleskopartig ausgebildet ist, mit eingefahrenem Teleskop-Schwenkarm,
- Fig. 8: die Ausführungsform nach Fig. 7 mit ausgezogenem Teleskopschwenkarm,
- Fig. 9: in teilgeschnittener Seitenansicht eine noch weitere Ausführungsform der Gerätehaltekonsole, und
- Fig. 10: eine Draufsicht der Anordnung nach Fig. 9.

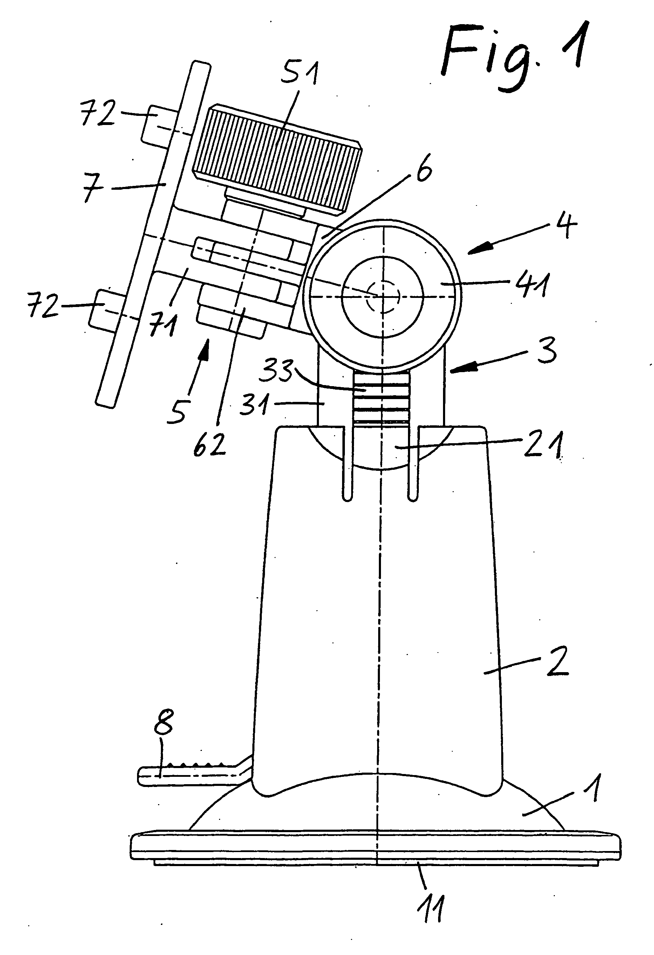

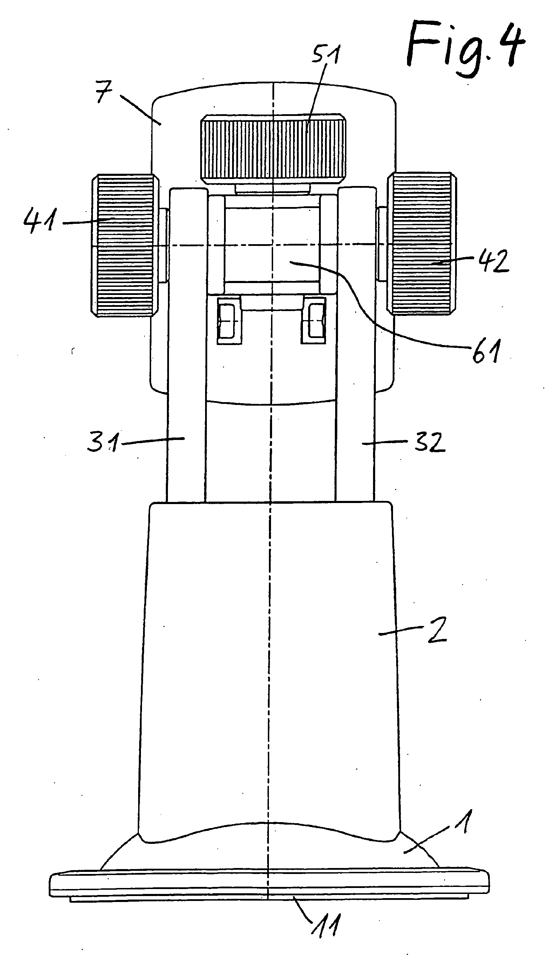

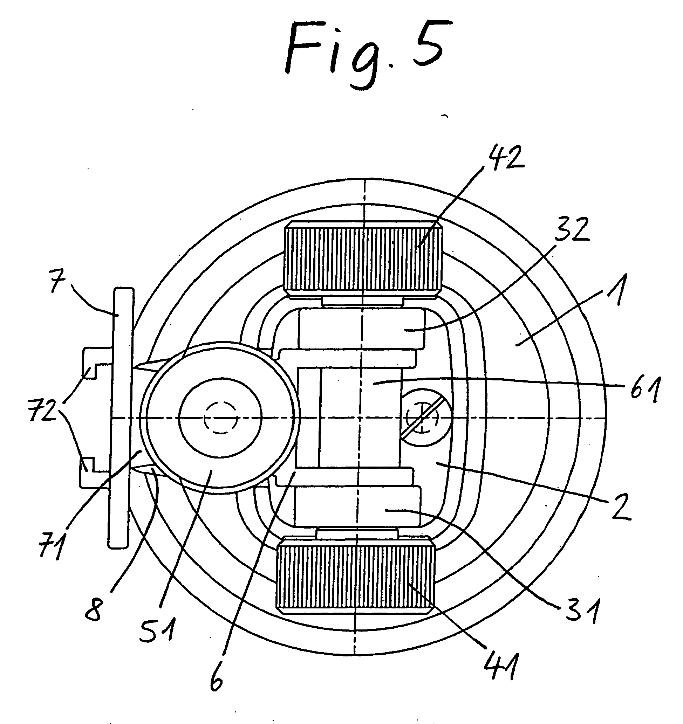

Die in den Zeichnungen nach den Fig. 1 bis 6 dargestellte Gerätehaltekonsole besteht aus einem Fuß 1, einer darauf fest angeordneten Säule 2, einem Teleskopglied 3, einem ersten arretierbaren Drehgelenkmechanismus 4, einem zweiten arretierbaren Drehgelenkmechanismus 5 mit zur Achse des ersten Drehgelenkmechanismus 4 orthogonal angeordneter Achse, einem Zwischenglied 6, das die beiden Drehgelenkmechanismen 4 und 5 miteinander verbindet und einer Halteplatte 7 zur lösbaren Aufnahme eines Geräts oder Gerätehalters. Die Halteplatte 7 ist mit der Säule 2 also über einen Verstellmechanismus verbunden, der die beiden Drehgelenkmechanismen 4 und 5, das Zwischenglied 6 und das Teleskopglied 3 umfaßt und dadurch eine Verstellung durch wahlweises Schwenken um die beiden Achsen der Drehgelenkmechanismen 4 und 5 sowie über das Teleskopglied 3 hinsichtlich der Distanz vom Fuß 1 ermöglicht. Die Bauteile der Haltekonsole bestehen im wesentlichen alle vorzugsweise aus Kunststoff.

Der Fuß 1 ist als Saugfuß ausgebildet. In den Zeichnungen ist die nach unten leicht über das Gehäuse des Fußes 1 überstehende Saugmembran 11 erkennbar. Dieser Saugmembran 11 ist ein Betätigungsmechanismus zugeordnet, der im Inneren der schachtartig ausgebildeten Säule 2 angeordnet und an sich aus der eingangs erwähnten Gebrauchsmusterschrift DE 203 13 215 U1 bekannt ist, aber natürlich auch davon abgewandelt ausgeführt sein kann. Von dem Betätigungsmechanismus, mittels dessen der Saugfuß, nämlich die Saugmembran 11, zwischen einer wirksamen und unwirksamen Position umschaltbar ist, ist in den Zeichnungen nur der nach vorne aus einer Öffnung der Säule 2 herausragende Betätigungshebel 8 sichtbar. Dessen in den Zeichnungen dargestellte untere Stellung entspricht der wirksamen Stellung der Saugmembran 11, in welcher deren Zentralbereich nach oben gezogen ist, um so einen eine Saugkraft erzeugenden Unterdruckraum unter dem Fuß 1 zu schaffen.

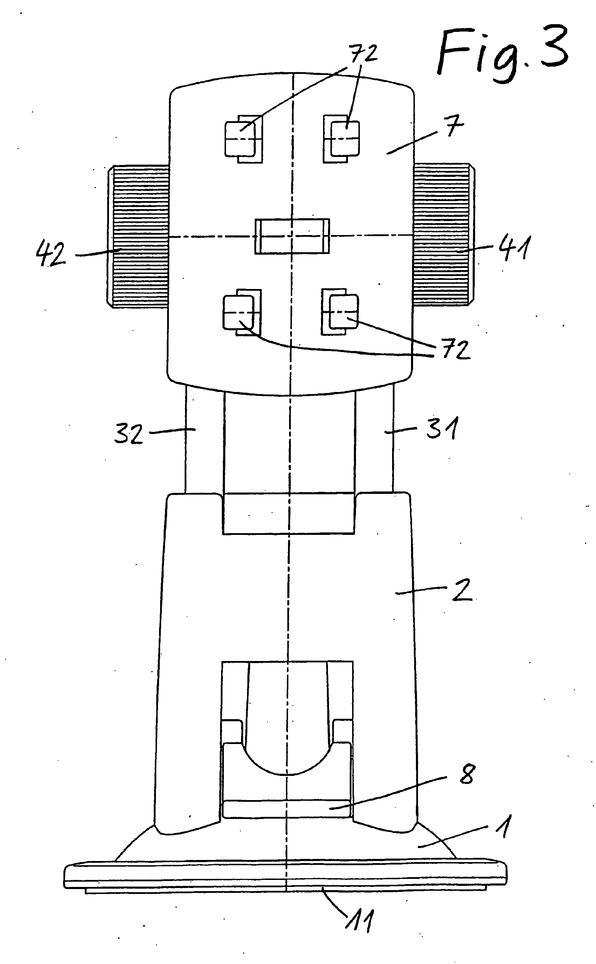

In der Säule 2 ist das Teleskopglied 3 geführt. Es besteht beim dargestellten Ausführungsbeispiel aus zwei parallelen Teleskopschienen 31, 32 (siehe Fig. 3, 4 und 5), die jeweils in der Säule 4 geführt sind und außenseitig mit einem Zahnstangenprofil 33 versehen sind, mit dem eine im oberen Bereich der Säule 2 angeordnete und damit einstückig ausgebildete Rastlasche 21 federnd zusammenwirkt. Die Anordnung ist so getroffen, dass das Teleskopglied 3 sich bei Anwenden einer entsprechenden Kraft relativ zur Säule 2 verschieben lässt, wobei dann die Haltekraft der Rastlasche 21 überwunden wird und diese entsprechend über das Zahnstangenprofil 33 ratscht. In der jeweils gewählten Auszugsposition arretieren die auf beiden Seiten der Säule 2 angeordneten Rastlaschen 21 das Teleskopglied 3 durch Einrasten in das jeweilige Zahnstangenprofil 33.

Der erste Drehgelenkmechanismus 4 umfaßt zwei Schrauben 41 und 42 mit gerändelten Köpfen, die durch Bohrungen der freien Enden der beiden Teleskopschienen 31, 32 hindurchgesteckt und in die Endhülse 61 des Zwischenglieds 6 eingeschraubt sind. Durch Festdrehen der Schrauben 41, 42 wird die Endhülse 61 mit der jeweiligen Teleskopschiene 31, 32 zusammengespannt, so dass dadurch eine klemmende Arretierung des Drehgelenkmechanismus 4 erfolgt.

Vorzugsweise ist (das ist in den Zeichnungen nicht sichtbar) an den axialen Stirnseiten der Endhülse 61 und den diesen zugewandten Innenseiten der Teleskopschienen 31, 32 jeweils radiale Zahnprofile gebildet, die eine formschlüssige Arretierung des Drehgelenkmechanismus beim Festdrehen der Schrauben 41, 42 gewährleisten.

Der zweite Drehgelenkmechanismus 5 ist durch ein gegabeltes Endstück 62 des Zwischenglieds 2 mit beim Ausführungsbeispiel drei Zinken, weiter durch ein zwischen diese greifendes gegabeltes Anschlussstück 71 der Halteplatte 7 mit zwei Zinken, und eine durch fluchtende Querbohrungen der Zinken des Endstücks 62 und des Anschlussstücks 71 verlaufende Schraube 51 mit gerändeltem Kopf gebildet, die in ein Gewinde in der Querbohrung des vom Rändelkopf der Schraube 51 entfernten Zinken des Endstücks 62 eingeschraubt, der im Bereich der Querbohrung dazu etwas verdickt ausgebildet ist. Zweckmäßigerweise ist das Gewinde in einer Metallmutter gebildet, die in die betreffende Teleskopschiene eingesetzt ist.

Beim Festdrehen der Schraube 51 werden die ineinandergreifenden Zinken des Endstücks 62 und des Anschlussstücks 71 zusammengespannt, so dass sich eine reibschlüssige Arretierung des Drehgelenkmechanismus 5 in der jeweils gewählten Schwenkposition der Halteplatte 7 ergibt. Es versteht sich, dass auch bei diesem Drehgelenkmechanismus eine zusätzliche Formschlussarretierung herstellen lässt wie beim Drehgelenkmechanismus 4, jedoch wird dies im Hinblick auf den sehr kurzen Hebelarm zwischen der Achse des Drehgelenkmechanismus 5 und der Halteplatte 7 im allgemeinen nicht notwendig sein.

Die Halteplatte 7 ist an ihrer Oberseite mit einer Anordnung von 4 vorstehenden, im Querschnitt jeweils L-förmigen Haltekrallen 72 versehen. Damit kann ein Gerätehalter zur Auf nahme eines Geräts der eingangs genannten Art oder ggf. ein solches Gerät auch unmittelbar an der Halteplatte 7 fixiert werden. Die Haltekrallen 72 greifen dabei in entsprechende komplementäre Schlitze am Boden des Gerätehalters oder des Geräts ein, wo sie vorzugsweise rastend aufgenommen werden. Sie bilden also mit den Schlitzen am Gerätehalter bzw. am Gerät einen Schnellverriegelungsmechanismus, um den Gerätehalter bzw. das Gerät mit einem Handgriff anbringen oder abnehmen zu können.

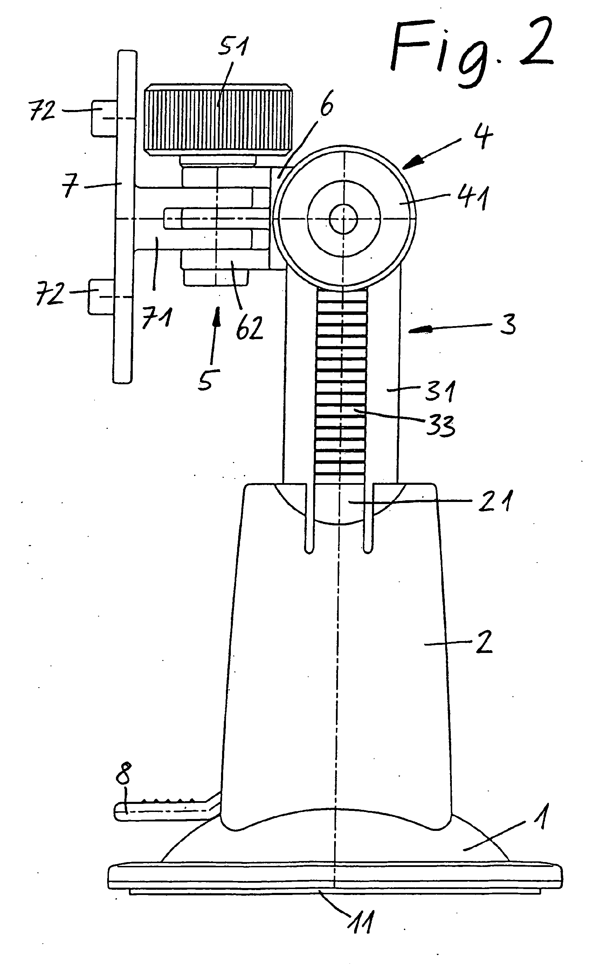

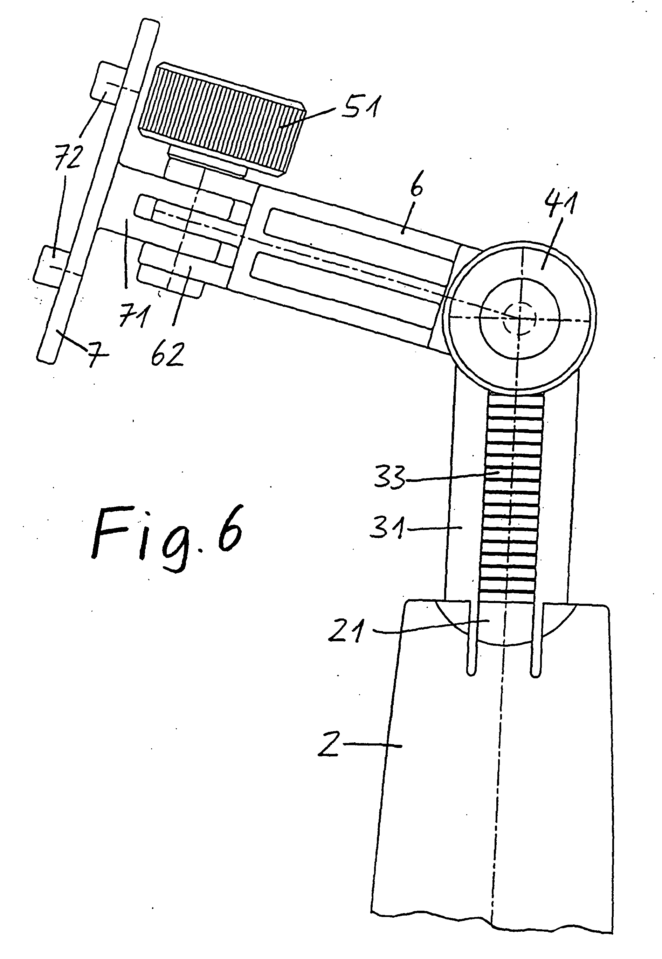

Fig. 6 zeigt die Gerätehaltekonsole in der gleichen Seitenansicht wie Fig. 2. Nur die Disposition der Haltekonsole ist etwas verändert. Das Zwischenstück 6 zwischen den beiden Drehgelenkmechanismen 4 und 5 ist bei der Haltekonsole in Fig. 6 nämlich erheblich länger als bei der Haltekonsole in Fig. 2, und die eingestellte Schwenkstellung des Zwischenstücks 6 ist gegenüber Fig. 2 etwas verändert und entspricht derjenigen in Fig. 1.

Das Zwischenstück 6 ist nämlich bei der Gerätehaltekonsole nach der Erfindung leicht austauschbar ausgebildet. Es brauchen nur die beiden Schrauben 41, 42 des Drehgelenkmechanismus 4 sowie die Schraube 51 des Drehgelenkmechanismus 5 gelöst und herausgezogen zu werden, um das Anschlussstück 71 der Halteplatte 7 vom gegabelten Endstück 62 des Zwischenglieds 6 abziehen und das Zwischenglied 6 mit seiner Endhülse 61 aus seiner Position zwischen den Enden der Teleskopschienen 31, 32 herausnehmen zu können. Das Einsetzen des Zwischenglieds 6 erfolgt entsprechend einfach. Vorzugsweise ist die Gerätehaltekonsole mit mehreren, nämlich zwei oder sogar 3 verschiedenen Zwischengliedern 6 unterschiedlicher Länge ausgestattet, so dass dem Benutzer ein baukastenartiges System mit der Möglichkeit der Auswahl der jeweils geeigneten Distanz zwischen den beiden Drehgelenkmechanismen 4, 5 zur Verfügung steht. Es versteht sich, dass alternativ dazu auch das Zwischenglied 6 als Teleskoparm ausgebildet sein kann, jedoch sprechen die einfachere Gestaltung und die bessere Stabilität für die Lösung nach dem Ausführungsbeispiel.

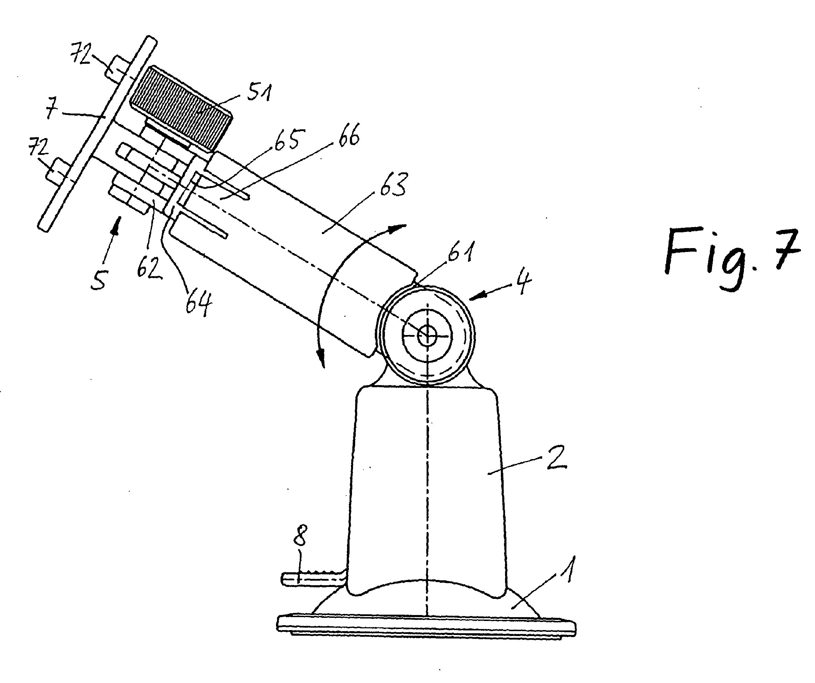

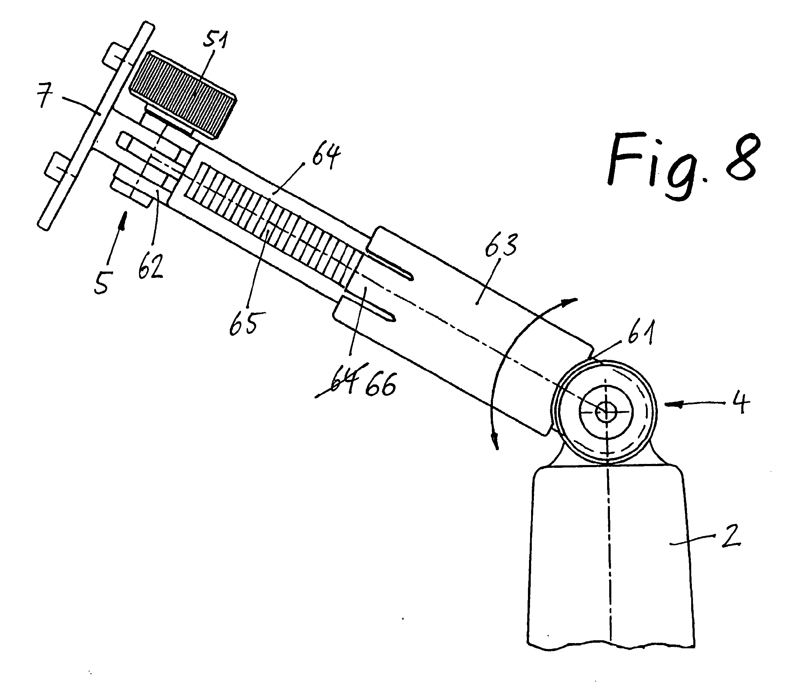

Die Fig. 7 und 8 zeigen eine alternative Ausführungsform der in den Fig. 1 bis 6 gezeigten Gerätehaltekonsole, wobei der Unterschied gegenüber der Anordnung nach den Fig. 1 bis 6 darin besteht, dass das als Schwenkarm ausgebildete schwenkbare Zwischenglied 6 als Teleskopglied ausgebildet ist und aus einem mit dem Drehgelenkmechanismus 4 verbundenen Teleskopelement 63 und einem mit dem Drehgelenkmechanismus 5 verbundenen Teleskopelement 64 besteht. Obwohl dies in den schematisch dargestellten Zeichnungen nicht eigens gezeigt ist, ist zwischen diesen beiden Teleskopelementen 63, 64 vorzugsweise ein Ratschenmechanismus entsprechend denjenigen vorgesehen, der bei der Ausführungsform nach den Fig. 1 bis 6 aus der Zahnstange 33 an jeder der Teleskopschienen 31, 32 gebildet ist und damit zusammenwirkenden federnden Rastlaschen 21 an der Säule 2 gebildet ist. Dementsprechend ist bei der Ausführungsform nach den Fig. 7 und 8 ebenfalls vorzugsweise an gegenüberliegenden Seiten des Teleskopelements 64 jeweils eine Zahnstange 65 gebildet, die mit einer federnden Rastlasche 66 des Teleskopelements 64 zusammenwirkt. Damit wird eine größtmögliche Stabilität und Schwingungsfreiheit des so längenveränderlich ausgebildeten Zwischenglieds 6 erreicht.

Bei der Ausführungsform nach den Fig. 7 und 8 ist der Drehgelenkmechanismus 4 fest mit der Säule 2 verbunden. Es versteht sich aber, dass auch eine Kombination der beiden Ausführungsformen möglich ist, nämlich mit einer Teleskopschienenverbindung zwischen dem ersten Drehgelenkmechanismus 4 und der Säule 2, wie bei den Ausführungsformen nach den Fig. 1 bis 6, und zusätzlich einer teleskopartigen Ausbildung des Zwischenglieds 6 nach der Ausführungsform gemäß den Fig. 7 und 8. Damit lässt sich, insbesondere wenn in Fahrzeugen der Oberklasse mit stark geneigter, sich weit nach vorne erstreckender Windschutzscheibe die Konsole mit dem Saugmechanismus an der Scheibe angebracht wird, eine optimale Positionierbarkeit der Halteplatte 7.

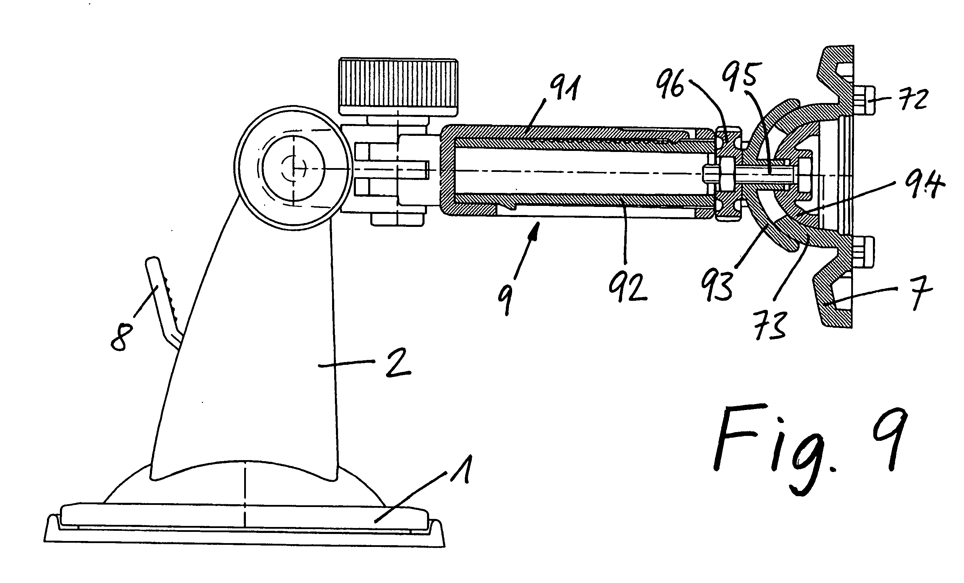

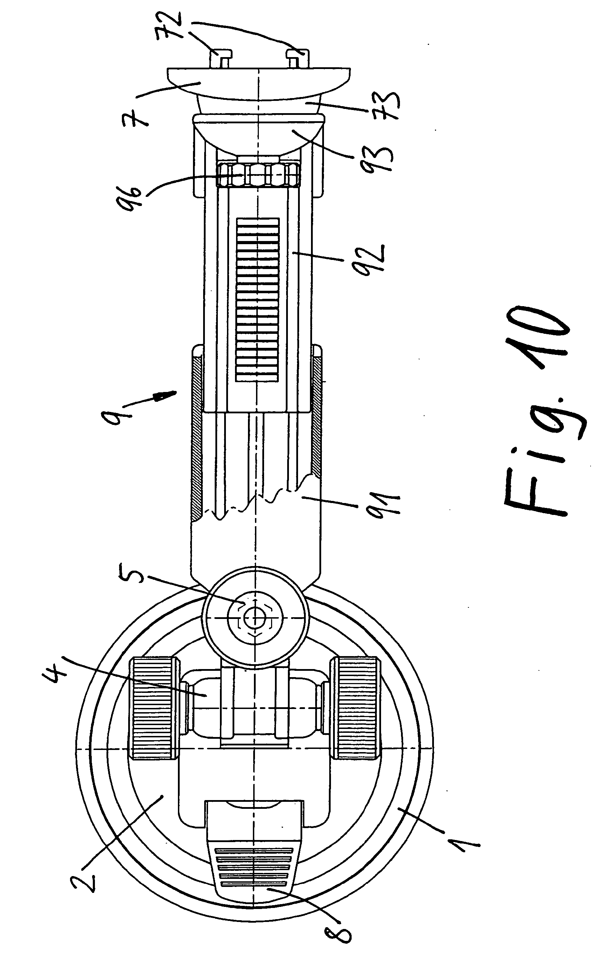

Die Ausführungsform nach den Figuren 9 und 10 bietet nochmals besonders universelle und stabile Einstellmöglichkeiten. Bei dieser Ausführungsform ist ein Teleskop-Zwischenglied 9 über einen Doppeldrehgelenkmechanismus 4, 5, 6 mit der Säule 2 verbunden. Der Doppeldrehgelenkmechanismus ist wie bei der Ausführungsform nach den Figuren 1 bis 5 ausgebildet und umfasst einen direkt mit der Säule 2 verbundenen Drehgelenkmechanismus 4, der über ein kurzes Zwischenglied 6 mit einem weiteren Drehgelenkmechanismus 5 mit zum Drehgelenkmechanismus 4 orthogonaler Gelenkachse verbunden ist. Beide Drehgelenkmechanismen 4, 5 weisen wiederum Klemmschrauben 41 bzw. 51 mit gerändelten Köpfen zum Festspannen des Gelenkmechanismus in der jeweils gewählten Einstellposition auf. Das Teleskop-Zwischenglied 9 besteht aus einem mit dem Gelenkmechanismus 5 verbundenen Teleskopelement 91 und einem damit rastbar zusammenwirkenden auszieh- und einschiebbaren Teleskopelement 92. Die Seitenansicht nach Figur 9 zeigt die vollständig eingeschobene Position der geschnitten dargestellten Teleskopelemente 91, 92, die Draufsicht nach Fig. 10 zeigt die ausgezogene Position.

Am vorderen Ende des ausziehbaren Teleskopelements 92 ist eine Kugelpfanne 93 angeordnet, in welche ein kugeliges Gegenelement 73 der Halteplatte 7 eingreift, die wiederum mit einer Anordnung von Haltekrallen 72 ausgestattet ist. Ein ebenfalls kugeliges Spannelement 94 mit einer Schraube 95 spannt das mit einer die Beweglichkeit ermöglichenden großen Aussparung versehene kugelige Element 73 der Halteplatte gegen die Kugelpfanne 93, wobei die Schraube 95 mit einer Mutter zusammenwirkt, die in einem gerändelten oder profiliertem Klemmrad 96 sitzt, das in eine Aussparung des vorderen Teils des Teleskopelements 92 eingesetzt ist, wie die Figuren 9 und 10 zeigen.

Es versteht sich, daß über die in den Zeichnungen dargestellten und vorstehend beschriebenen Ausführungsbeispiele hinaus noch weitere Ausführungsvarianten möglich sind, insbesondere hinsichtlich der jeweiligen Gelenkausbildungen. Allerdings erscheinen gegenwärtig die dargestellten und beschriebenen Ausführungsformen als im Hinblick auf eine größtmögliche Stabilität und Flexibilität der Einstellung besonders vorteilhaft.

## Patentansprüche

1. Gerätehaltekonsole mit einem Fuß (1), einer Säule (2) und einer damit über einen arretierbaren Gelenkmechanismus (4, 5) verbundenen Halteplatte (7) zum Anbringen eines Gerätehalters oder Geräts, wobei
der Gelenkmechanismus (4, 5) mit einem Teleskopglied (3) verbunden ist, das in der Säule (2) geführt und wahlweise bis um eine konstruktionsbedingte Maximaldistanz aus der Säule (2) ausziehbar sowie in der jeweils gewählten Auszugsposition arretierbar (21, 33) ist,
**dadurch gekennzeichnet, dass** das Teleskopglied (3) durch zwei separate beabstandete Teleskopschienen (31, 32) gebildet ist, die jeweils eine zahnstangenartige Rastenleitse (33) aufweisen und mit jeweils einer federnden Arretierlasche (21) an der Säule (2) zusammenwirken, und deren freie Enden zusammen mit einem Ende des Zwischenglieds (6) den ersten Drehgelenkmechanismus (4) bilden.

2. Haltekonsole nach Anspruch 1, wobei die zahnstangenartigen Rastenstreifen (33) und die Rastlasche (21) einen Ratschenmechanismus bilden und so ausgelegt sind, dass bei Ausüben einer gewissen Zug- oder Druckkraft auf das Teleskopglied (3) die Rastlasche (21) durch die Rasten ausgelenkt wird und diese unter der Rastlasche hindurchgleiten können.

3. Haltekonsole nach Anspruch 1 oder 2, wobei die Halteplatte (7) über ein aus zwei ineinander schiebbaren und bis um eine konstruktionsbedingte Maximaldistanz relativ zueinander ausziehbaren Teleskopelementen (63, 64; 91, 92) gebildetes und in der jeweils gewählten Auszugsposition arretierbares (65, 66) Zwischenglied (6; 9) mit dem Gelenkmechanismus (4; 5) verbunden ist.

4. Haltekonsole nach Anspruch 3, wobei der Gelenkmechanismus zwei hintereinander angeordnete scharnierartige Drehgelenkmechanismen (4, 5) mit zueinander orthogonalen Drehachsen gebildet ist, die durch das Zwischenglied (6) miteinander verbunden sind.

5. Haltekonsole nach Anspruch 4, wobei der zweite Drehgelenkmechanismus (5) durch ein gegabeltes Endstück (62) des Zwischenglieds (6), ein in dieses greifendes gegabeltes Anschlussstück (71) der Halteplatte (7) und eine durch Querbohrungen der Zinken des Endstücks (62) und des Anschlussstücks (71) geführte Klemmschraube (51) gebildet ist.

6. Haltekonsole nach einem der Ansprüche 3 bis 5, wobei eine Mehrzahl wahlweise zu verwendender Zwischenglieder (6) unterschiedlicher Länge vorgesehen ist und das Zwischenglied (6) leicht austauschbar montiert ist.

7. Haltekonsole nach Anspruch 3, wobei die Säule (2) über einen Doppelgelenkmechanismus (4, 5, 6) mit zwei zueinander orthogonalen Gelenkachsen mit dem aus zwei Teleskopelementen (91, 92) bestehenden Zwischenglied (9) verbunden ist, das wiederum über einen Gelenkmechanismus (93, 94, 95) mit der Halteplatte (7) verbunden ist.

8. Haltekonsole nach einem der Ansprüche 3 bis 7, wobei der Gelenkmechanismus zwischen der Halteplatte (7) und dem Zwischenglied (6, 9) als Kugelpfannengelenk ausgebildet ist, das durch eine am Ende des Zwischenglieds angeordnete Kugelpfanne (93), ein in dieses eingreifendes Kugelschalenelement (73) der Halteplatte (7), und ein ebenfalls kugeliges Spannelement (94), einer Schraube (95) und einer Mutter sowie einem in einer Aussparung des Zwischenglieds (9) nahe der Kugelpfanne (93) angeordneten Spannrad (96), wobei eines der Elemente Schraube und Mutter im Spannelement (94) und das andere dem Spannrad (96) zugeordnet ist.

9. Haltekonsole nach einem der Ansprüche 1 bis 8, wobei der Fuß (1) als Saugfuß mit einer dessen Boden bildenden beweglichen Saugmembran (11) ausgebildet ist und die Saugmembran (11) mittels eines innerhalb der schachtartig ausgebildeten Säule (2) angeordneten Betätigungsmechanismus, der einen aus der Säule (2) herausragenden Betätigungshebel (8) aufweist, zwischen einer unwirksamen und einer wirksamen Stellung bewegbar ist.

10. Haltekonsole nach einem der Ansprüche 1 bis 9, wobei die Halteplatte (7) eine Anordnung von von der Halteplatte wegstehenden Haltekrallen (72) mit L-Querschnitt aufweist, die zum Eingriff in entsprechende komplementäre Schlitzöffnungen des Gerätehalters oder Geräts bestimmt sind und Schnellkupplungsorgane zum Anbringen des Gerätehalters oder Geräts bilden.

## Claims

1. An apparatus support console comprising a foot (1) of a column (2) and a support plate (7) connected thereto via a lockable joint mechanism (4, 5) for attaching an apparatus holder or apparatus, the joint mechanism (4, 5) being connected to a telescopic member (3) which is guided in the column (2) and can optionally be extended out of the column (2) up to a design-conditioned maximum distance and be locked in the respectively selected extended position (21, 33), **characterized in that** the telescopic member (3) is formed by two separate spaced-apart telescopic rails (31, 32) which each have a toothed rack-like latching strip (33) and interact with a respective resilient locking tab (21) on the column (2) and the free ends of which form together with an end of the intermediate member (6) the first pivot joint mechanism (4).

2. The support console according to claim 1, wherein the toothed rack-like latching straps (33) and the latching tab (21) form a ratchet mechanism and are configured in such a way that when a certain tensile or compressive force is exerted on the telescopic member (3), the latching tab (21) is deflected by the latches which are able to slide through below the latching tab.

3. The support console according to claim 1 or 2, wherein the support plate (7) is connected to the joint mechanism (4; 5) via an intermediate member (6; 9) which is formed from two telescopic elements (63, 64; 91, 92), which can be inserted one inside the other and extended relative to each other up to a design-conditioned maximum distance, and can be locked in the respectively selected extended position (65, 66).

4. The support console according to claim 3, wherein the joint mechanism is formed by two hinge-like pivot joint mechanisms (4, 5) which are arranged one after the other and have axes of rotation which are orthogonal to each other and are joined together by the intermediate member (6).

5. The support console according to claim 4, wherein the second pivot joint mechanism (5) is formed by a forked end piece (62) of the intermediate member (6), a forked connection piece (71), engaging therewith, of the support plate (7) and by a clamping screw (51) which is guided through transverse holes in the prongs of the end piece (62) and of the connection piece (71).

6. The support console according to any one of claims 3 to 5, wherein there is provided a plurality of intermediate members (6) of differing lengths which may be used according to choice and the intermediate member (6) is fitted so as to be easily exchangeable.

7. The support console according to claim 3, wherein the column (2) is connected, via a double joint mechanism (4, 5, 6) having two axes of articulation which are orthogonal to each other, to the intermediate member (9) which consists of two telescopic elements (91, 92) and is, in turn, connected to the support plate (7) via a joint mechanism (93, 94, 95).

8. The support console according to any one of claims 3 to 7, wherein the joint mechanism between the support plate (7) and the intermediate member (6, 9) is configured as a ball-and-socket joint which is formed by a ball socket (93) arranged at the end of the intermediate member, a ball shell element (73) engaging therewith of the support plate (7), and a likewise spherical bracing element (94), a screw (95) and a nut and also a bracing wheel (96) arranged in a recess in the intermediate member (9) in proximity to the ball socket (93), one of the elements screw and nut being associated with the bracing element (94) and the other with the bracing wheel (96).

9. The support console according to any one of claims 1 to 8, wherein the foot (1) is configured as a suction foot with a movable suction membrane (11) forming the base thereof and the suction membrane (11) is movable between an inactive and an active position by means of an actuating mechanism which is arranged within the shaft-like column (2) and has an actuating lever (8) protruding out of the column (2).

10. The support console according to any one of claims 1 to 9, wherein the support plate (7) has an arrangement of retaining claws (72) which project away from the support plate, have an L-shaped across section, are intended for engagement with corresponding complementary slotted openings in the apparatus holder or apparatus and form rapid coupling members for attaching the apparatus holder or apparatus.

## Revendications

1. Console de support d'appareil avec un pied (1), une colonne (2) et une platine de support (7) reliée à celle-ci par l'intermédiaire d'un mécanisme d'articulation (4, 5) blocable, destinée à la mise en place d'un support d'appareil ou appareil, dans laquelle le mécanisme d'articulation (4, 5) est relié à un élément télescopique (3) qui est guidé dans la colonne (2) et au choix peut être déployé de la colonne (2) jusqu'à une distance maximale qui dépend de la conception et bloqué dans la position de déploiement respectivement choisie (21, 33),
**caractérisé en ce que**
l'élément télescopique (3) est formé par deux rails (31, 32) télescopiques écartés séparés qui présentent chacun une barre à crans (33) du type crémaillère et coopèrent chacun avec une languette d'arrêt (21) élastique sur la colonne (2) et dont les extrémités libres forment conjointement avec une extrémité de l'élément intermédiaire (6) le premier mécanisme à articulation tournante (4).

2. Console de support selon la revendication 1, dans laquelle les tiges à crans (33) du type crémaillère et la languette d'arrêt (21) forment un mécanisme d'encliquetage et sont conçues de telle manière qu'en exerçant une certaine force de traction ou de pression sur l'élément télescopique (3), la languette d'arrêt (21) est sortie des crans et ceux-ci peuvent glisser sous la languette d'arrêt.

3. Console de support selon la revendication 1 ou 2, dans laquelle la platine de support (7) est reliée au mécanisme d'articulation (4; 5) par l'intermédiaire d'un élément intermédiaire (6 ; 9) formé de deux éléments télescopiques (63, 64 ; 91, 92) pouvant rentrer l'un dans l'autre et se déployer relativement l'un à l'autre d'une distance maximale qui dépend de la conception et blocable dans la position respectivement choisie (65, 66).

4. Console de support selon la revendication 3, dans laquelle le mécanisme d'articulation est formé par deux mécanismes à articulation tournante (4, 5) du type charnière disposés l'un derrière l'autre avec des axes de rotation orthogonaux l'un à l'autre, qui sont reliés entre eux par l'élément intermédiaire (6).

5. Console de support selon la revendication 4, dans laquelle le deuxième mécanisme à articulation tournante (5) est formé par une pièce d'extrémité (62) fourchue de l'élément intermédiaire (6), une pièce de raccordement (71) fourchue de la platine de support (7) s'engageant dans ladite pièce d'extrémité et une vis de serrage (51) passant dans des alésages transversaux des dents de la pièce d'extrémité (62) et de la pièce de raccordement (71).

6. Console de support selon l'une des revendications 3 à 5, dans laquelle il est prévu une pluralité d'éléments intermédiaires (6) à utiliser au choix de différentes longueurs et l'élément intermédiaire (6) est monté de manière à s'échanger facilement.

7. Console de support selon la revendication 3, dans laquelle la colonne (2) est reliée par l'intermédiaire d'un mécanisme d'articulation double (4, 5, 6) avec des axes d'articulation orthogonaux l'un à l'autre à l'élément intermédiaire (9) constitué de deux éléments télescopiques (91, 92), qui est relié à son tour à la platine de support (7) par l'intermédiaire d'un mécanisme d'articulation (93, 94, 95).

8. Console de support selon l'une des revendications 3 à 7, dans laquelle le mécanisme d'articulation est formé entre la platine de support (7) et l'élément intermédiaire (6, 9) sous la forme d'articulation à cuvette rotule qui est formée par une cuvette rotule (93) disposée à une extrémité de l'élément intermédiaire, un élément de coussinet sphérique (73) de la platine de support (7) s'insérant dans l'élément intermédiaire et un élément de serrage (94) également sphérique, une vis (95) et un écrou, ainsi qu'une roue de serrage (96) disposée dans un évidement de l'élément intermédiaire (9) à proximité de la cuvette rotule (93), l'un des éléments vis et écrou étant associé à l'élément de serrage (94) et l'autre à la roue de serrage (96).

9. Console de support selon l'une des revendications 1 à 8, dans laquelle le pied (1) est réalisé sous la forme d'un pied ventouse avec une membrane d'aspiration (11) mobile formant son fond et la membrane d'aspiration (11) est mobile entre une position inopérante et une position opérante au moyen d'un mécanisme d'actionnement disposé à l'intérieur de la colonne (2) réalisée en forme de gaine, lequel présente un levier d'actionnement (8) dépassant de la colonne (2).

10. Console de support selon l'une des revendications 1 à 9, dans laquelle la platine de support (7) présente un agencement de griffes de retenue (72) de section en L faisant saillie de la platine de support qui sont destinées à s'engager dans des ouvertures de fente complémentaires de manière correspondante du support d'appareil ou de l'appareil et forment des organes d'accouplement rapides pour poser le support d'appareil ou l'appareil.
